# EUROPEAN PATENT APPLICATION

(11) **EP 4 711 964 A1**
(43) Date of publication of application: **18.03.2026**
(21) Application number: 24803357.3
(22) Date of filing: 19.04.2024
(51) Int. Cl.: G06F 21/71

(54) **INFORMATION PROCESSING SYSTEM, INFORMATION PROCESSING METHOD, AND PROGRAM**

(30) Priority: 10.05.2023 JP 2023077707
(71) Applicant: FeliCa Networks, Inc., Tokyo 141-0032 (JP)
(72) Inventor: GOTO, Junji, Tokyo 141-0032 (JP)
(74) Representative: D Young & Co LLP
(86) International application number: PCT/JP2024/015584
(87) International publication number: WO 2024/232243

(57) **Abstract**

The present disclosure relates to an information processing system, an information processing method, and a program that are designed to realize common use of SEs more reliably.

An information processing unit that instructs a SE to perform processing based on a processing request from a service provider reads, from the SE, an identifier for identifying the SE device on which the SE is mounted, refers to chip group information in which a chip group that is a unit obtained by grouping the identifier is registered for each piece of content of difference in implementation of the SE device, and controls behaviors with respect to the SE, depending on the chip group to which the identifier belongs. The present technology can be applied to a TSM server or a TSM client that instructs a SE to perform processing, for example.

## Description

### TECHNICAL FIELD

The present disclosure relates to an information processing system, an information processing method, and a program, and more particularly, to an information processing system, an information processing method, and a program that are designed to realize common use of GP-SEs more reliably.

### BACKGROUND ART

Mounting of secure elements compliant with the Global Platform specification (these secure elements will be hereinafter referred to as GP-SEs) on smartphones is becoming common these days. For example, for GP-SEs, interfaces with device hosts are standardized by the Global Platform specification, and therefore, a user of a GP-SE is expected to be able to use devices equipped with GP-SEs of different chip vendors by a common means.

Patent Document 1 discloses a communication method by which a set of an ID and data (command) is delivered from a server to a secure element, an analyzer of the secure element determines the corresponding ID on the basis of a reference value for the secure element, identifies the data corresponding to the ID from the set, and uses the identified data.

### CITATION LIST

### PATENT DOCUMENT

Patent Document 1: Japanese Translation of PCT International Application Publication No. 2016-536701

### SUMMARY OF THE INVENTION

### PROBLEMS TO BE SOLVED BY THE INVENTION

Meanwhile, in a case where chip vendors of GP-SEs are different, difference in implementation is generated sometimes for each device equipped with a GP-SE (such a device will be hereinafter referred to as a GP-SE device). Therefore, it is necessary for a trusted service manager (TSM) server and a TSM client serving as a use source of GP-SEs to perform processing by taking difference in implementation into account.

For example, in a case where there is difference in interpretation by each chip vendor regarding a point not strictly specified by the Global Platform specification (or a point with ambiguity), it is assumed that difference will occur in the usage method, behaviors, or the like of GP-SEs as viewed from the users of the GP-SEs, and structures of responses from the GP-SEs to a certain command will vary. Furthermore, there may be a case where defective products are selected at the time of developing GP-SEs by chip vendors, and some GP-SEs do not work as specified by the Global Platform specification.

Therefore, service providers that are to provide services using GP-SEs are expected to reliably realize common use of GP-SEs without the need to be conscious of difference in implementation for each GP-SE device.

The present disclosure has been made in view of such circumstances, and aims to realize common use of GP-SEs more reliably.

### SOLUTIONS TO PROBLEMS

An information processing system according to one aspect of the present disclosure includes an information processing unit that instructs a SE to perform processing based on a processing request from a service provider, and the information processing unit reads, from the SE, an identifier for identifying the SE device on which the SE is mounted, refers to chip group information in which a chip group that is a unit obtained by grouping the identifier is registered for each piece of content of difference in implementation of the SE device, and controls behaviors with respect to the SE, depending on the chip group to which the identifier belongs.

An information processing method according to one aspect of the present disclosure is implemented by an information processing unit that instructs a SE to perform processing based on a processing request from a service provider, and the information processing method includes: reading, from the SE, an identifier for identifying the SE device on which the SE is mounted; referring to chip group information in which a chip group that is a unit obtained by grouping the identifier is registered for each piece of content of difference in implementation of the SE device; and controlling behaviors with respect to the SE, depending on the chip group to which the identifier belongs.

A program according to one aspect of the present disclosure causes a computer to perform information processing, the computer instructing a SE to perform processing based on a processing request from a service provider, and the information processing includes: reading, from the SE, an identifier for identifying the SE device on which the SE is mounted; referring to chip group information in which a chip group that is a unit obtained by grouping the identifier is registered for each piece of content of difference in implementation of the SE device; and controlling behaviors with respect to the SE, depending on the chip group to which the identifier belongs.

In one aspect of the present disclosure, an identifier for identifying a SE device on which a SE is mounted is read from the SE, chip group information in which a chip group that is a unit obtained by grouping the identifier is registered is read for each piece of content of difference in implementation of the SE device, and behaviors with respect to the SE are controlled depending on the chip group to which the identifier belongs.

### BRIEF DESCRIPTION OF DRAWINGS

Fig. 1 is a diagram for explaining an example of processing depending on difference in implementation between GP-SE devices.
Fig. 2 is a block diagram illustrating an example configuration of a first embodiment of an information processing system to which the present technology is applied.
Fig. 3 is a flowchart for explaining information processing in the information processing system illustrated in Fig. 2.
Fig. 4 is a block diagram illustrating an example configuration of a second embodiment of an information processing system to which the present technology is applied.
Fig. 5 is a flowchart for explaining information processing in the information processing system illustrated in Fig. 4.
Fig. 6 is a block diagram illustrating an example configuration of an embodiment of a computer to which the present technology is applied.

### MODE FOR CARRYING OUT THE INVENTION

Specific embodiments to which the present technology is applied will be described below in detail with reference to the drawings.

### <Example of Processing Depending on Difference in Implementation of GP-SE Device>

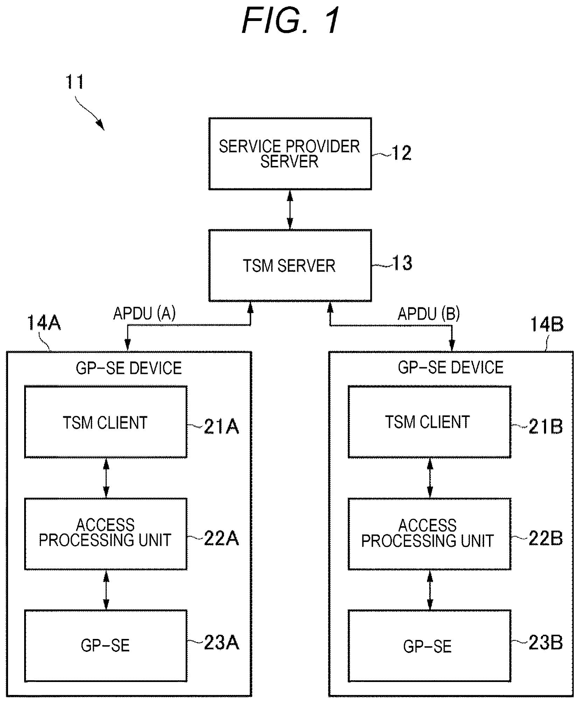

First, an example of processing depending on difference in implementation for each of GP-SE devices on which GP-SEs manufactured by different chip vendors are mounted is described with reference to Fig. 1.

In an information processing system 11 illustrated in Fig. 1, a TSM server 13 that has received a processing request from a service provider server 12 performs communication compliant with Application Protocol Data Unit (APDU), and transmits and receives commands and responses to and from a GP-SE device 14. APDU is a communication protocol for smart cards specified by the International Organization for Standardization (ISO) 7816-4.

In a GP-SE device 14, an applet or an operating system (OS) in a GP-SE 23 performs processing in response to a command transmitted from the TSM server 13 via a TSM client 21 and an access processing unit 22, and a response as a result of the processing is transmitted to the TSM server 13.

Here, in a GP-SE device 14A on which a GP-SE 23A manufactured by a chip vendor A is mounted, the TSM server 13 and a TSM client 21A transmit and receive commands and responses depending on implementation of the GP-SE 23A according to APDU(A). Likewise, in a GP-SE device 14B on which a GP-SE 23B manufactured by a chip vendor B is mounted, the TSM server 13 and a TSM client 21B transmit and receive commands and responses depending on implementation of the GP-SE 23B according to APDU(B).

In this manner, the TSM server 13, which is the use source of GP-SEs, and the TSM clients 21 need to transmit and receive commands and responses suited to the respective GP-SEs 23, depending on the difference in implementation of the GP-SE 23 of each GP-SE device 14.

### <First Example Configuration of Information Processing System>

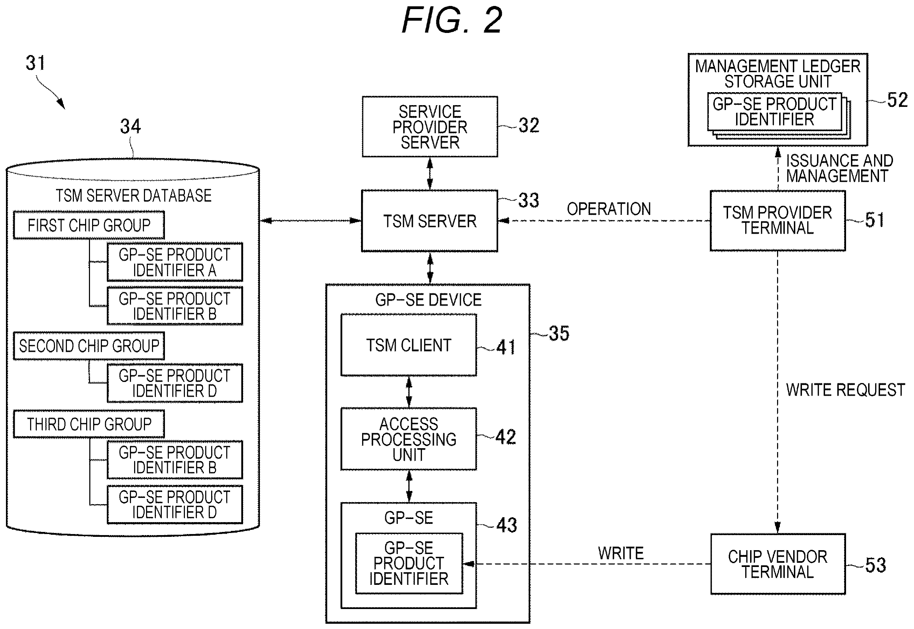

Fig. 2 is a block diagram illustrating an example configuration of a first embodiment of an information processing system to which the present technology is applied.

As illustrated in Fig. 2, an information processing system 31 is formed by connecting a service provider server 32, a TSM server 33, a TSM server database 34, and a GP-SE device 35 via a communication network.

The TSM provider operating the TSM server 33 manipulates a TSM provider terminal 51 to issue and manage a GP-SE product identifier for identifying the GP-SE device 35, and registers the GP-SE product identifier in a management ledger storage unit 52. When the TSM provider requests the chip vendor manufacturing a GP-SE 43 to write the GP-SE product identifier, the chip vendor then operates a chip vendor terminal 53 to write the GP-SE product identifier into the GP-SE 43 at the time of manufacturing the GP-SE 43. As the GP-SE product identifier is written into the GP-SE 43 in this manner, the GP-SE product identifier can be read into the TSM server 33 via an end-to-end secure communication path from the GP-SE 43 to the TSM server 33.

The service provider server 32 is operated by a service provider that provides a secure service for an end user through the GP-SE 43, and transmits, to the TSM server 33, a processing request for processing necessary for the service.

The TSM server 33 establishes an end-to-end secure communication path to the GP-SE 43, and performs communication compliant with APDU. For example, the TSM server 33 can install or delete an applet in the GP-SE 43, and securely perform communication compliant with APDU with an applet or an OS in the GP-SE 43, to transmit and receive commands and responses. The TSM server 33 then instructs the GP-SE 43 to perform processing based on the processing request transmitted from the service provider server 32.

In the TSM server database 34, a unit obtained by grouping GP-SE product identifiers (the unit will be hereinafter referred to as a chip group) is registered for each piece of content of difference in implementation of the GP-SE device 35. For example, the GP-SE product identifiers of GP-SE devices 35 whose response to a certain command has a first pattern can be grouped into a "first chip group", the GP-SE product identifiers of GP-SE devices 35 whose response to the command has a second pattern can be grouped into a "second chip group", and the GP-SE product identifiers of GP-SE devices 35 whose response to the command has a third pattern can be grouped into a "third chip group", depending on difference in implementation of the GP-SEs 23. Note that the TSM server database 34 may be included in the TSM server 33.

The GP-SE device 35 is a user terminal such as a smartphone, and includes a TSM client 41, an access processing unit 42, and a GP-SE 43, for example.

The TSM client 41 is installed in the GP-SE device 35 by the TSM provider, and performs communication compliant with APDU with the TSM server 33.

The access processing unit 42 is middleware prepared in the GP-SE device 35 to access the GP-SE 43, and can be implemented according to a specification such as Open Mobile Application Programming Interface (API), for example.

In the GP-SE 43, the GP-SE product identifier is written at the time of manufacturing. For example, the GP-SE 43 can perform processing according to an applet installed by the TSM server 33.

In the information processing system 31 designed as described above, when receiving a processing request for the GP-SE device 35 from the service provider server 32, the TSM server 33 reads the GP-SE product identifier from the GP-SE 43 of the GP-SE device 35 that is the target of the processing request. The TSM server 33 then refers to the TSM server database 34, and recognizes the chip group to which the GP-SE product identifier read from the GP-SE device 35 belongs. As a result, when performing communication compliant with APDU with the GP-SE device 35 to instruct the GP-SE 43 to perform processing based on the processing request, the TSM server 33 can control the command and the response, depending on the chip group to which the GP-SE device 35 belongs.

For example, in a case where a GP-SE product identifier B has been written into the GP-SE 43 of the GP-SE device 35, the TSM server 33 can recognize that the GP-SE product identifier B belongs to the first chip group and the third chip group, as shown in the TSM server database 34. Thus, in this case, the TSM server 33 can transmit a XXX command on the basis of the fact that the GP-SE product identifier B belongs to the first chip group, or skip transmission of a ZZZ command on the basis of the fact that the GP-SE product identifier B belongs to the third chip group. Further, in other cases, the TSM server 33 can perform control to transmit a YYY command.

As described above, in the information processing system 31, the TSM server 33 can control behaviors (such as the content of the command to be transmitted to the GP-SE 43, and the method of processing a response from the GP-SE 43, for example) with respect to the GP-SE 43, depending on the chip group to which the GP-SE product identifier belongs. Accordingly, in the information processing system 31, the difference in implementation of each of the GP-SE devices 35 on which the GP-SEs 43 manufactured by different chip vendors are mounted is absorbed, and each GP-SE 43 can be made to operate in the same manner. Thus, the information processing system 31 can more reliably realize common use of GP-SEs.

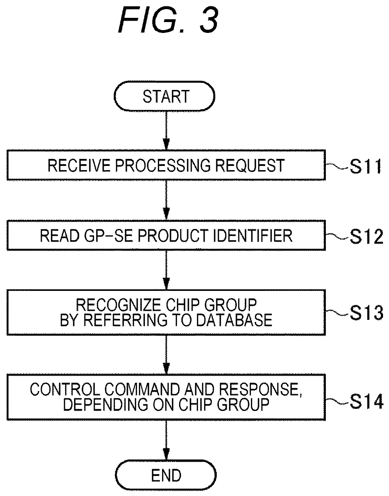

Fig. 3 is a flowchart for explaining information processing by which the TSM server 33 instructs the GP-SE 43 to perform processing based on a processing request in the information processing system 31 illustrated in Fig. 2.

In step S11, the TSM server 33 receives a processing request transmitted from the service provider server 32.

In step S12, the TSM server 33 reads the GP-SE product identifier from the GP-SE 43 of the GP-SE device 35 that is the target of the processing request received in step S11.

In step S13, the TSM server 33 refers to the TSM server database 34, and recognizes the chip group to which the GP-SE product identifier read from the GP-SE device 35 in step S12 belongs.

In step S14, when performing communication compliant with APDU with the GP-SE device 35 to issue an instruction to perform processing based on the processing request received in step S11, the TSM server 33 controls the command and the response, depending on the chip group recognized in step S13.

When the processing based on the processing request from the service provider server 32 is completed, the information processing is then ended.

As described above, the TSM server 33 can control a command and a response, depending on the chip group to which the GP-SE product identifier of the GP-SE device 35 serving as the target of a processing request belongs. Because of this, the information processing system 31 can absorb the difference in implementation of each of the GP-SE devices 35 on which the GP-SEs 43 manufactured by different chip vendors are mounted, and cause each GP-SE 43 to operate in the same manner. Thus, common use of GP-SEs can be realized more reliably.

### <Second Example Configuration of Information Processing System>

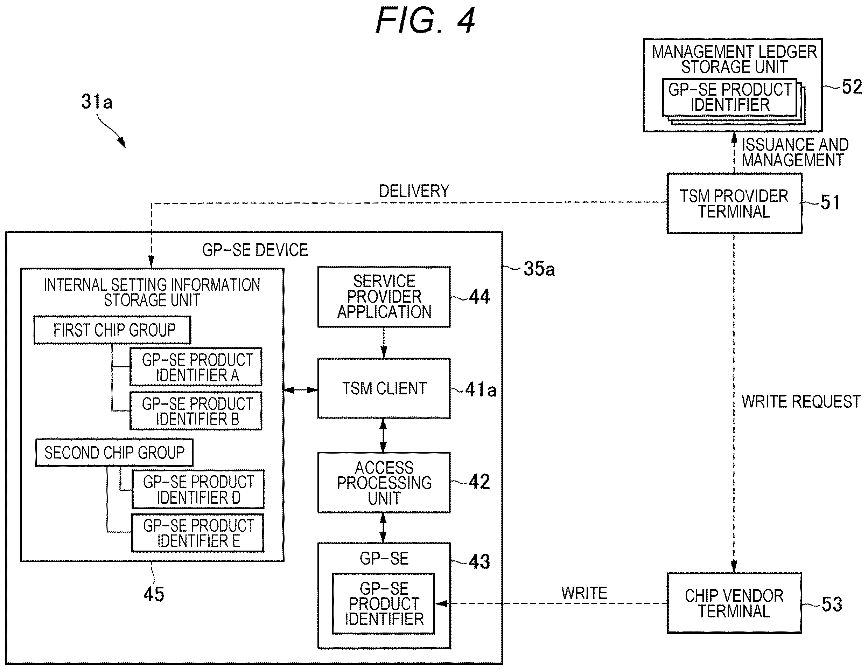

Fig. 4 is a block diagram illustrating an example configuration of a second embodiment of an information processing system to which the present technology is applied. Note that, in an information processing system 31a illustrated in Fig. 4, components that are the same as those of the information processing system 31 in Fig. 2 are denoted by the same reference numerals as those in Fig. 2, and a detailed explanation thereof is not made herein.

The information processing system 31a illustrated in Fig. 4 can be configured without the TSM server 33 illustrated in Fig. 2.

As illustrated in the drawing, a GP-SE device 35a has the same configuration as the information processing system 31 in Fig. 2 in including the access processing unit 42 and the GP-SE 43. However, the GP-SE device 35a has a configuration different from that of the information processing system 31 illustrated in Fig. 2 in including a TSM client 41a, a service provider application 44, and an internal setting information storage unit 45.

The service provider application 44 is installed in the GP-SE device 35a by the service provider that provides a secure service for an end user through the GP-SE 43. The service provider application 44 then supplies the TSM client 41a with a processing request for requesting processing necessary for the service to be provided by the service provider.

Like the TSM server database 34 in Fig. 2, the internal setting information storage unit 45 stores the chip group to which the GP-SE product identifier belong as internal setting information for each piece of content of difference in implementation of the GP-SE devices 35a. This internal setting information can be delivered from the TSM provider terminal 51 by the TSM provider.

The TSM client 41a is installed in the GP-SE device 35a by the TSM provider, and instructs the GP-SE 43 to perform processing based on the processing request supplied from the service provider application 44. At that point of time, the TSM client 41a refers to the internal setting information storage unit 45, and controls behaviors (such as the content of the command to be supplied to the GP-SE 43, and the method of processing a response from the GP-SE 43, for example) with respect to the GP-SE 43, depending on the chip group to which the GP-SE device 35a belongs.

In the information processing system 31a configured as described above, when acquiring the processing request supplied from the service provider application 44, the TSM client 41a reads the GP-SE product identifier from the GP-SE 43. The TSM client 41a then refers to the internal setting information storage unit 45, and recognizes the chip group to which the GP-SE product identifier read from the GP-SE 43 belongs. As a result, when instructing the GP-SE 43 to perform processing based on the processing request, the TSM client 41a can control the command and the response to be exchanged with the GP-SE 43, depending on the chip group to which the GP-SE device 35a belongs.

In this manner, like the information processing system 31 in Fig. 2, the information processing system 31a absorbs the difference in implementation of each of the GP-SE devices 35a on which the GP-SEs 43 manufactured by different chip vendors are mounted, and can cause each GP-SE 43 to operate in the same manner. Thus, the information processing system 31a can more reliably realize common use of GP-SEs.

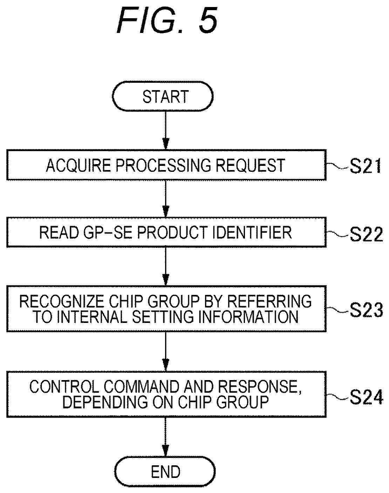

Fig. 5 is a flowchart for explaining information processing by which the TSM client 41a instructs the GP-SE 43 to perform processing based on a processing request in the information processing system 31a illustrated in Fig. 4.

In step S21, the TSM client 41a acquires a processing request supplied from the service provider application 44.

In step S22, the TSM client 41a reads the GP-SE product identifier from the GP-SE 43.

In step S23, the TSM client 41a refers to the internal setting information storage unit 45, and recognizes the chip group to which the GP-SE product identifier read from the GP-SE 43 in step S22 belongs.

In step S24, when issuing an instruction to perform processing based on the processing request acquired in step S21, the TSM client 41a controls the command and the response to be exchanged with the GP-SE 43, depending on the chip group recognized in step S23.

When the processing based on the processing request from the service provider application 44 is completed, the information processing is then ended.

As described above, the TSM client 41a can control a command and a response, depending on the chip group to which the GP-SE product identifier of the GP-SE device 35a belongs. Because of this, the information processing system 31a can absorb the difference in implementation of each of the GP-SE devices 35a on which the GP-SEs 43 manufactured by different chip vendors are mounted, and cause each GP-SE 43 to operate in the same manner. Thus, common use of GP-SEs can be realized more reliably.

### <Example Configuration of Computer>

Next, a series of the processes described above (an information processing method) can be performed by hardware or can be performed by software. In a case where the series of processes is performed by software, a program forming the software is installed in a general-purpose computer or the like.

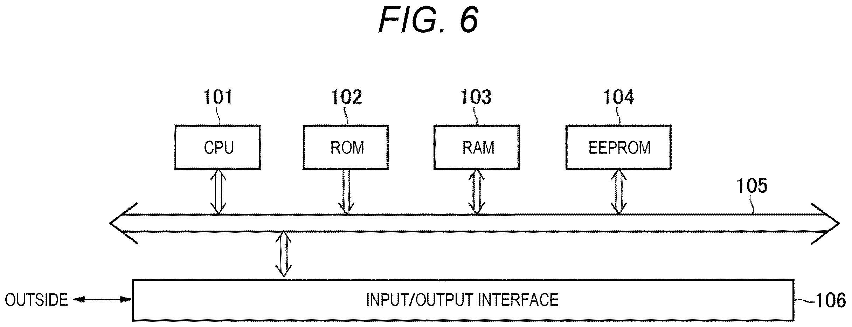

Fig. 6 is a block diagram illustrating an example configuration of an embodiment of a computer in which the program for performing the series of processes described above is installed.

In the computer, a central processing unit (CPU) 101, a read only memory (ROM) 102, a random access memory (RAM) 103, and an electronically erasable and programmable read only memory (EEPROM) 104 are interconnected by a bus 105. An input/output interface 106 is further connected to the bus 105, and the input/output interface 106 is connected to the outside.

In the computer designed as above, the CPU 101 loads a program stored in the ROM 102 and the EEPROM 104 into the RAM 103 via the bus 105, for example, and executes the program so that the above-described series of processes is performed. Furthermore, the program to be executed by the computer (CPU 101) can be written beforehand into the ROM 102, or can be installed or updated in the EEPROM 104 from the outside via the input/output interface 106.

Here, in the present specification, the processing to be performed by the computer in accordance with the program is not necessarily performed in time series according to the sequence described as the flowcharts. In other words, the processing to be performed by the computer in accordance with the program includes processing to be performed in parallel or independently (for example, parallel processing or object-based processing).

Further, the program may be executed by one computer (one processor), or may be executed in a distributed manner by a plurality of computers. Moreover, the program may be transferred to a distant computer and then be executed.

Further, in the present description, a system means a set of components (devices, modules (parts), or the like), and it does not matter whether or not all the components are in the same housing. Accordingly, a plurality of devices housed in separate housings and connected to one another via a network, and one device including a plurality of modules housed in one housing, are both systems.

Furthermore, a configuration described as a single device (or a processing unit) may be divided into and configured as a plurality of devices (or processing units), for example. Conversely, the configurations described above as a plurality of devices (or processing units) may be integrally formed as a single device (or a processing unit). Furthermore, it goes without saying that a component other than the above-mentioned components may be added to the configuration of each device (or each processing unit). Moreover, as long as the configuration and operation of the entire system are substantially the same, some of the components of a certain device (or processing unit) may be included in the configuration of another device (or another processing unit).

Furthermore, the present technology can be configured as cloud computing in which a plurality of devices shares a single function and jointly performs processing over a network, for example.

Further, the program described above can be executed by any appropriate device, for example. In that case, the device is only required to have a necessary function (functional block or the like) and obtain necessary information.

Furthermore, each step described in the flowcharts described above can be executed by a single device, or can be executed by a plurality of devices in a shared manner, for example. Moreover, in a case where a single step includes a plurality of processes, the plurality of processes included in the single step can be performed by a single device or can be performed by a plurality of devices in a shared manner. In other words, the plurality of processes included in the single step can also be performed as a plurality of steps. Conversely, the processes described as the plurality of the steps can also be collectively performed as one step.

Note that, in the program to be executed by a computer, the processes in the steps describing the program may be performed in the time series described in the present specification, or may be performed in parallel, or independently at a necessary timing such as when a call is made. That is, as long as there is no contradiction, the process in each step may be performed in a different order from the above-described order. Moreover, the processes in the steps describing the program may be performed in parallel with processes according to another program, or may be performed in combination with processes according to another program.

Note that, the present technologies that have been described in the present specification can each be implemented independently as a single entity, as long as there is no contradiction. It goes without saying that any plurality of present technologies can be implemented in combination. For example, some or all of the present technologies described in any of the embodiments can be implemented in combination with some or all of the present technologies described in another one of the embodiments. Furthermore, part or all of any of the above-described present technologies can be implemented together with another technology that has not been described above.

### <Examples of Combinations of Configurations>

Note that the present technology can also provide the following configurations.
(1) An information processing system including
   an information processing unit that instructs a secure element (SE) to perform processing based on a processing request from a service provider, in which
   the information processing unit
   reads, from the SE, an identifier for identifying a SE device on which the SE is mounted,
   refers to chip group information in which a chip group that is a unit obtained by grouping the identifier is registered for each piece of content of difference in implementation of the SE device, and
   controls a behavior with respect to the SE, depending on the chip group to which the identifier belongs.
(2) The information processing system according to (1), in which
   the identifier is written into the SE by a chip vendor during manufacture of the SE.
(3) The information processing system according to (2), in which
   the identifier is issued and managed by a trusted service manager (TSM) provider serving as a use source of the SE, and
   the identifier is written into the SE when writing of the identifier is requested from the TSM provider to the chip vendor.
(4) The information processing system according to (3), in which
   the information processing unit is a TSM server that is operated by the TSM provider.
(5) The information processing system according to (4), in which
   a database in which the chip group information is registered is connected to the TSM server, or is included in the TSM server.
(6) The information processing system according to (3), in which
   the information processing unit is a TSM client that is installed in the SE device by the TSM provider.
(7) The information processing system according to (6), in which
   the SE device has an information storage unit in which the chip group information delivered from the TSM provider is registered.
(8) An information processing method implemented by an information processing unit that instructs a secure element (SE) to perform processing based on a processing request from a service provider,
   the information processing method including:
   reading, from the SE, an identifier for identifying a SE device on which the SE is mounted;
   referring to chip group information in which a chip group that is a unit obtained by grouping the identifier is registered for each piece of content of difference in implementation of the SE device; and
   controlling a behavior with respect to the SE, depending on the chip group to which the identifier belongs.
(9) A program for causing a computer to perform information processing, the computer instructing a secure element (SE) to perform processing based on a processing request from a service provider,
   the information processing including:
   reading, from the SE, an identifier for identifying a SE device on which the SE is mounted;
   referring to chip group information in which a chip group that is a unit obtained by grouping the identifier is registered for each piece of content of difference in implementation of the SE device; and
   controlling a behavior with respect to the SE, depending on the chip group to which the identifier belongs.

Note that, the present embodiment is not limited to the embodiments described above, and various modifications can be made to it without departing from the gist of the present disclosure. Furthermore, the effects described in the present specification are merely examples and are not restrictive, and some other effects may be achieved.

### REFERENCE SIGNS LIST

- 31: Information processing system
- 32: Service provider server
- 33: TSM server
- 34: TSM server database
- 35: GP-SE device
- 41: TSM client
- 42: Access processing unit
- 43: GP-SE
- 44: Service provider application
- 45: Internal setting information storage unit
- 51: TSM provider terminal
- 52: Management ledger storage unit
- 53: Chip vendor terminal

## Claims

1. An information processing system comprising
an information processing unit that instructs a secure element (SE) to perform processing based on a processing request from a service provider, wherein
the information processing unit
reads, from the SE, an identifier for identifying a SE device on which the SE is mounted,
refers to chip group information in which a chip group that is a unit obtained by grouping the identifier is registered for each piece of content of difference in implementation of the SE device, and
controls a behavior with respect to the SE, depending on the chip group to which the identifier belongs.

2. The information processing system according to claim 1, wherein
the identifier is written into the SE by a chip vendor during manufacture of the SE.

3. The information processing system according to claim 2, wherein
the identifier is issued and managed by a trusted service manager (TSM) provider serving as a use source of the SE, and
the identifier is written into the SE when writing of the identifier is requested from the TSM provider to the chip vendor.

4. The information processing system according to claim 3, wherein
the information processing unit includes a TSM server that is operated by the TSM provider.

5. The information processing system according to claim 4, wherein
a database in which the chip group information is registered is connected to the TSM server, or is included in the TSM server.

6. The information processing system according to claim 3, wherein
the information processing unit includes a TSM client that is installed in the SE device by the TSM provider.

7. The information processing system according to claim 6, wherein
the SE device has an information storage unit in which the chip group information delivered from the TSM provider is registered.

8. An information processing method implemented by an information processing unit that instructs a secure element (SE) to perform processing based on a processing request from a service provider,
the information processing method comprising:
reading, from the SE, an identifier for identifying a SE device on which the SE is mounted;
referring to chip group information in which a chip group that is a unit obtained by grouping the identifier is registered for each piece of content of difference in implementation of the SE device; and
controlling a behavior with respect to the SE, depending on the chip group to which the identifier belongs.

9. A program for causing a computer to perform information processing, the computer instructing a secure element (SE) to perform processing based on a processing request from a service provider,
the information processing including:
reading, from the SE, an identifier for identifying a SE device on which the SE is mounted;
referring to chip group information in which a chip group that is a unit obtained by grouping the identifier is registered for each piece of content of difference in implementation of the SE device; and
controlling a behavior with respect to the SE, depending on the chip group to which the identifier belongs.
